# EUROPEAN PATENT SPECIFICATION

(11) **EP 2 747 948 B1**
(45) Date of publication and mention of the grant of the patent: **09.05.2018**
(21) Application number: 11871578.8
(22) Date of filing: 26.08.2011
(51) Int. Cl.: B25F 5/02, A01G 3/06, B23D 57/02, B27B 17/02, B28D 1/08

(54) **GUIDE AND CONTROL ASSEMBLY**
FÜHRUNGS- UND STEUERANORDNUNG
ENSEMBLE GUIDE ET COMMANDE

(43) Date of publication of application: 02.07.2014
(73) Proprietor: Husqvarna AB, 561 82 Huskvarna (SE)
(72) Inventor: MARTINSSON, Pär, SE-556 26 Jönköping (SE); BERGQUIST, Oskar, S-561 35 Huskvarna (SE); RACOV, Mikael, S-561 39 Huskvarna (SE); SVENNUNG, Johan, SE-554 23 Jönköping (SE); BJÖRNLINGER, Johan, S-561 51 Huskvarna (SE)
(86) International application number: PCT/SE2011/051030
(87) International publication number: WO 2013/032374

(56) References cited:
- EP-A2- 0 024 480
- EP-A2- 2 186 609
- DE-A1- 4 027 135
- DE-A1-102008 020 173
- DE-A1-102008 020 173
- GB-A- 2 219 104
- GB-A- 2 219 104
- JP-A- S6 099 508
- US-A1- 2006 220 612

## Description

### TECHNICAL FIELD

This invention relates to battery driven handheld power tools. In particular, the invention deals with a guide and control assembly of a battery driven handheld power tool.

### BACKGROUND OF THE INVENTION

Battery driven power tools such as chain saws, vegetation trimmers and blowers are known in the art. They provide a possibility to add functionality which can be controlled by an operator, such as functionality related to the way the tools are powered and controlled.

In the German patent application DE102008020173 a power tool, i.e. power drill, for drilling hard materials is provided. The tool has an operating switch for switching-on and switching-off an electric motor i.e. brushless direct current motor. A manually operable control device is provided for unidirectional operational control of the electric motor. The control device includes electronic push-buttons, where the electric motor is switchable between two operating modes i.e. preset speed-or torque stages, by the electronic push-buttons. Each push-button includes an illuminant e.g. LED, for functional display e.g. error and overload display and the push-buttons are encapsulated by films.

A hand-held power tool comprises an electric motor for driving a tool holder is provided in the UK patent application GB2219104. Located on the housing of the tool is a keyboard for inputting to motor control means information to define a selected combination of operating conditions. The keyboard has a first single key for selecting a tool function, for example drilling, from a defined range of tool functions, a second single key for selecting a required workpiece material, for example wood, from a defined range of workpiece materials, and two further keys+ and -for selecting, from a defined range, another parameter, for example drill size, appropriate to the selected tool function. A visual display also located on the tool housing is energisable to show symbols indicative of the selected combination of operating conditions.

In the Japanese patent application JPS6099508 a frame of electric drills and its forming method are provided. On the upper part of a housing accommodating a motor, a space which has two openings, is provided. An input/output block comprising a unit inputting indications to a control unit or an optical display unit is inserted in a space parallel to the motor shaft direction. The input/ output block is electrically connected to a control unit being housed in a handle cover by means of a lead wire. Since mounting, holding, and fixing of the above-mentioned components are performed without any screw, the frame structure becomes simple and convenient to use.

There is a need for arrangements making it easier to use this new functionality. The arrangements should be easy to manufacture at a low cost. It is also desirable that the arrangements add as little weight as possible to the tools and that they prevent unintentional operator interaction.

### SUMMARY OF THE INVENTION

It is an object of the present invention to provide an arrangement making it easier to use the new kind of functionality described above. The arrangement should be easy to manufacture at low cost, low weight and configured so as to prevent unintentional operator interaction.

According to an aspect of the solution the objective is at least partially achieved by means of a guide and control assembly of a battery driven portable handheld power tool which guide and control assembly comprises a main handle of the tool, arranged to be gripped by a hand of an operator, in an operating position, so as to permit the operator to carry and guide the power tool with the hand during operational use thereof, a recessed user interaction panel comprising a plurality of user input devices and a first status indicating device, the user interaction panel being formed in a panel receiving portion of a housing of the power tool. The user interaction panel is positioned such that the user input devices are reachable by a thumb of the operator when the hand is in the operating position.

Thereby, an arrangement is provided such that the operator may use the user input device when his or her hand is in the operating position. This is convenient and comfortable for the operator.

By providing a recessed user interaction panel, the control panel and the user input devices provided on it are protected from unintentional user interaction as well as from unintentional interaction from trees, branches etc. during user and transportation of the saw.

Providing both user input devices and indication devices in the same control panel facilitates usage of the tool, since the operator can focus his or her attention to one single area of the tool when using any of these devices.

According to an embodiment, the user interaction panel is positioned at an upper surface of a body portion of the power tool. In this way, the user input devices as well as the status indicating devices are visible to an operator during use of the tool.

According to an embodiment, the main handle extends in a longitudinal direction of the power tool, and wherein the user interaction panel is arranged in front of the main handle. Thereby, an ergonomically advantageous guide and control assembly is achieved.

According to an embodiment, the first user input device is an activation button, arranged to control activation of a control circuit connected to an electric motor of the power tool.

According to an embodiment, one user input device is chosen from the group comprising an energy saving mode activating button, a change of rotation direction button and a handle heating activation button.

According to an embodiment, the at least one status indicating device comprises a light emitting diode.

According to an embodiment, the at least one status indicating device is chosen from the group comprising a battery status indicator, an activation status indicator, a rotation direction indicator, an energy saving mode indicator and an error warning indicator.

According to an embodiment, the user interaction panel comprises a plurality of status indicating devices.

According to an embodiment, the battery driven portable handheld power tool is a top handle chain saw.

According to an embodiment, the power tool is a rear handle chain saw.

According to an embodiment, the power tool is a hedge trimmer.

According to an embodiment, the power tool is a grass trimmer.

According to an embodiment, the power tool is a blower.

According to a second aspect of the solution a battery driven portable handheld power tool comprising a guide and control assembly to the first aspect is provided.

### DEFINITIONS

As used herein the following terms have the following meanings:
Upwards and downwards are defined based on a supporting surface on which the tools may be positioned (i.e. based on the XZ-plane indicated in the drawings).
A front end of the tool is an end distal to the operator during normal use of the tool. A rear end is consequently an end proximal to the operator during normal use of the tool.
A longitudinal axis of the tool extends from the rear end to the front end.
As used herein the longitudinal vertical plane is the XY plane indicated in the drawings.

### BRIEF DESCRIPTION OF THE DRAWINGS

The invention will be understood and appreciated more fully from the following detailed description, taken in conjunction with the drawings, in which:
Fig. 1 is a partial perspective view of a top handle chain saw comprising a guide and control assembly according to embodiments herein, with the chain and guide bar broken away;
Fig. 2 is a top view of the top handle chain saw of Fig. 1;
Fig. 3 is a cross-sectional view of the guide and control assembly of the top handle chain saw of Figs. 1 and 2, taken along line I-I in Fig. 2;
Fig. 4 is an enlarged top view of a portion of the chain saw according to Fig. 2;
Fig. 5 is a perspective view of a vegetation trimmer, comprising a guide and control assembly according to embodiments herein;
Fig. 6 is a partial perspective view of a guide and control assembly of the vegetation trimmer of Fig. 5;
Fig. 7 is a top view corresponding to Fig. 6;
Fig. 8 is a partial perspective view of a rear handle chain saw comprising a guide and control assembly according to embodiments herein, with the guide bar and chain broken away;
Fig. 9 is a partial perspective view corresponding to Fig. 8, with a hand of an operator gripping the handle in an operating position;
Fig. 10 corresponds to Fig. 9, with a hand of an operator gripping the handle in an operating position while pressing a user input device of a user interaction panel of the guide and control assembly of Fig. 7.

### DESCRIPTION OF PREFERRED EMBODIMENTS

The present invention will be described more fully hereinafter with reference to the accompanying drawings, in which preferred embodiments of the invention are shown. The invention may, however, be embodied in many different forms and should not be construed as limited to the embodiments set forth herein; rather these embodiments are provided so that this disclosure will be thorough and complete, and will fully convey the scope of the invention to those skilled in the art. In the drawings, like numbers refer to like elements.

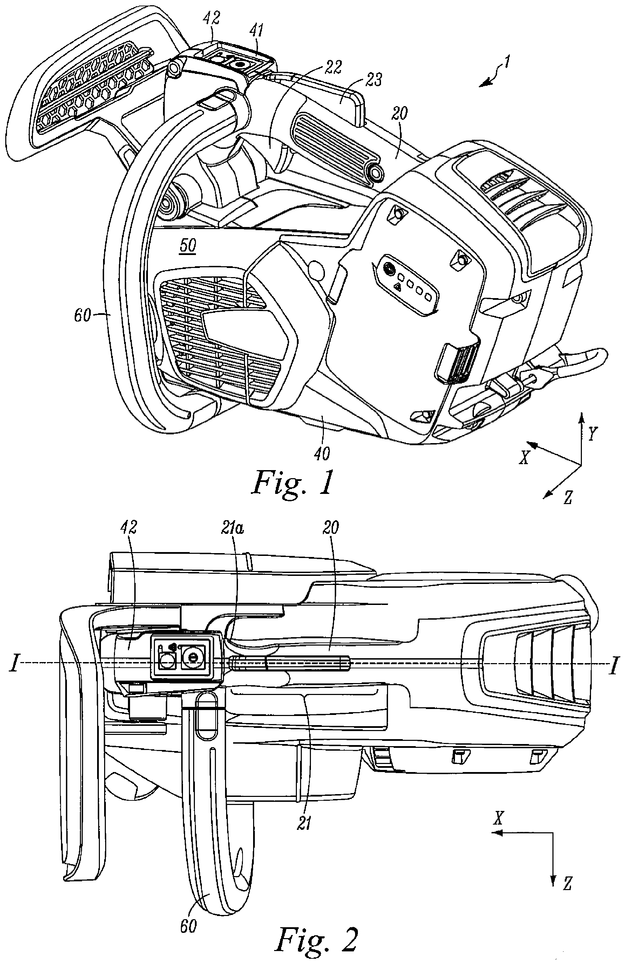

Figs. 1, 5 and 8 are partial perspective views of different battery driven hand held power tools 1. They all have a guide and control assembly 10 according to the present invention.

Referring to Fig. 1, a body portion 50 of a battery driven top handle chain saw 1 is shown. The saw 1 has a main handle 20, embodied as a top handle 20 with which an operator of the saw carries and guides the saw. The saw also has a supplementary handle 60. A cover 40 or housing 40 encloses the body portion.

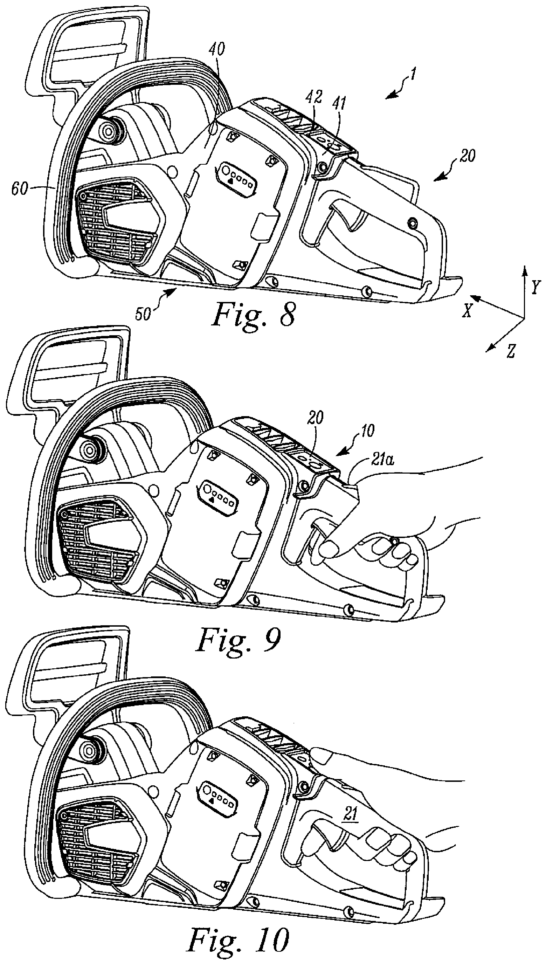

During use of the saw 1, the operator grips the top handle 20 with his or her right hand. The top handle 20 extends in a longitudinal direction X of the saw. The handle 20 has a hand receiving portion 21. In this disclosure, a front end 21a of the hand receiving portion is defined as the position of the handle corresponding to the radial side of the operator's index finger when the operator grips the handle in a normal working position. In Figs. 9 and 10, a hand is shown in normal operating positions on a main handle of a rear handle chain saw. The operating position of the hand is similar on a top handle chain saw. When the hand is in the normal operating position, the thumb may enclose the handle or may rest on top of the handle and/or on a surface in front of the handle.

A trigger 22 is arranged on a lower side of the front handle. On the opposite side, a trigger lock lever 23 or main switch is provided.

An electric motor, driving a saw chain of the battery powered saw, is connected to a control circuit having an active state in which the control circuit allows electric current to flow into the motor when the trigger lock lever 23 is activated (pressed) and an inactive state in which the control circuit does not allow electric current to flow to the motor even if the trigger lock lever 23 is pressed.

Switching between the active and passive state of the control circuit may be initiated by the operator by means of a user input device 31 connected to the control circuit. The control circuit may also be arranged to switch from the active state to the passive state without any user interaction.

In the embodiments herein, the user input device 31 is embodied as an activation button 31, which may be pressed by the user. The activation button 31 is arranged in a control panel 30 or user interaction panel.

Since the user input devices are arranged such that they are reachable by a thumb of the operator when his or her hand is in the operating position, the trigger as well as the trigger lock lever may be activated at the same time as the operator uses a user input device, such as an activation button.

The control panel 30 also comprises a second user input device 31'. In the embodiment shown in Figs. 1-4 the second user input device 31' is an energy saving mode button 31' which may be used for activating/deactivating an energy saving mode of the electric motor.

The control panel is mounted in a recessed portion of the housing 40. This means that a main extension surface of the control panel is recessed relative to the area neighboring the control panel. The area neighboring the control panel may also be provided with protruding edges. In this way, the control panel and the user input devices provided on it are protected from unintentional user interaction as well as from unintentional interaction from trees, branches etc. during use and transportation of the saw.

The area neighboring the control panel may also be provided with protruding edges, so as to provide a recessed portion (relative to the edges) in which the control panel is arranged.

The main surface of the control panel is preferably recessed by 2-10 mm relative to the area neighbouring the control panel.

The control panel may be a silicone or rubber key pad, in which the user input devices are integrally formed, as seen from an outside of the saw body.

The user input devices may also be formed as separate push buttons arranged in the control panel. Obviously, a lot of other kinds of input devices could also be used, such as toggle switches, scroll wheels or sliding switches. Different kinds of user input devices could be used in the same guide and control assembly.

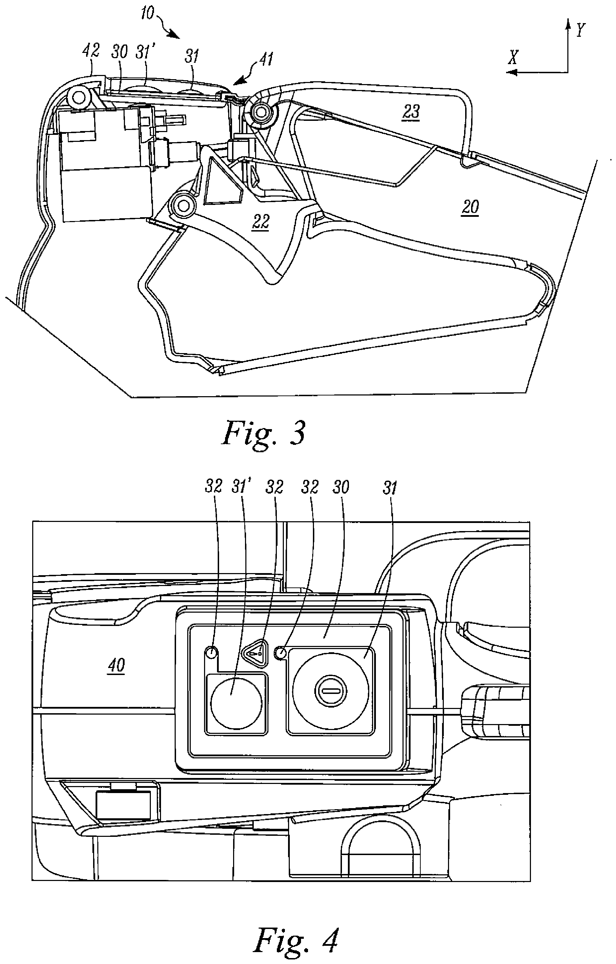

The user input devices may protrude from the main surface of the control panel. In the embodiment shown in Fig. 3 they are designed such that they do not protrude beyond a surface of the area neighboring the control panel. The user input devices may also be defined in the same plane as the main surface of the control panel.

The control panel also comprises one or several status indicating devices 32. The status indicating devices may be embodied as light emitting diodes, LEDs 32. The status indicating devices may also be embodied using a display device, or in another suitable manner.

The status indicating devices provide information to the operator related to states of the motor, battery, etc.

There may be status indicating devices corresponding to the respective user input devices 31.

In the embodiment shown in Figs. 1-4, there is one LED 32 indicating if the control unit is in the activated mode or not. This LED 32 is preferably positioned near activation button 31.

There may also be a second LED 32 indicating if the energy saving mode of the motor is activated or not.

There may also be a status indicating device indicating the charging level of the battery.

Furthermore there may be a third status indicating device 32, such as yet another LED 32, indicating that an error has occurred. Such an error indicating device may be used as a warning, indicating that something requires the operator's attention.

The control panel is positioned in the vicinity of the handle, such that the operator may reach them with a thumb of the hand gripping the handle, while the hand is in a normal operating position.

In this way, the operator does not have to change his or her grip when activating the user input devices.

The user interaction panel and its user input devices are preferably arranged such that a distance between the user input device positioned farthest away from the handle and the front end 21a of the hand receiving portion of the handle, in a longitudinal direction of the tool, is less than 90 mm.

The control panel could be integrated in the handle.

In the embodiment shown in Figs. 1-4, the control panel 30 is positioned on an upper surface of the main body of the tool, in front of the handle. By means of positioning the control panel in front of the main handle, and not integrally with the handle, unintentional user interaction may be avoided. Furthermore, any protruding edges surrounding the user interaction panel do not come into the way of the operator's hand during operation of the tool.

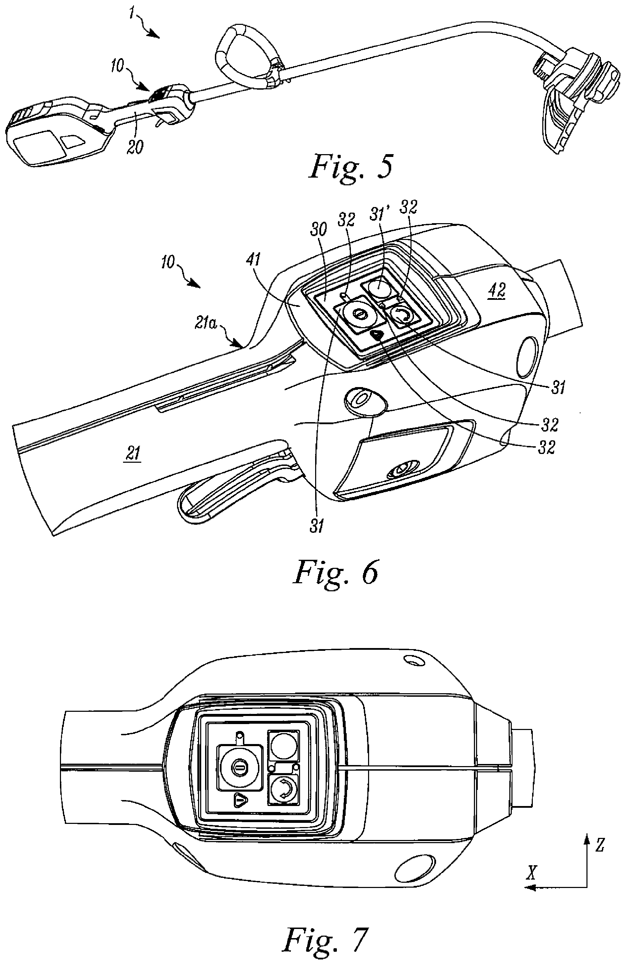

In Figs. 5-7, the battery driven portable handheld power tool is embodied as a grass trimmer. The guide and control assembly is in most aspects similar to the one of the top handle chain saw.

In the case of a trimmer, the main handle 20 may be arranged between a battery accommodating body portion and a control circuit accommodating body portion of the trimmer.

The control panel may be arranged in front of the main handle, on a normally upwardly facing surface of the control circuit accommodating body portion.

The control panel may comprise the same user input devices and status indication devices as the chain saw control panel described previously.

In the embodiment shown in Figs. 5-7, the control panel furthermore comprises a button arranged to activate switching from a first rotation direction of a cutting member of the trimmer to an opposite rotation direction.

In Figs. 8-10, the battery driven portable handheld power tool is embodied as a rear handle chain saw. In case of a rear handle chain saw, the main handle 20 is a rear handle 203.
In all other aspects, the guide and control assembly is similar to the one of the top handle chain saw.

The control panel may comprise the same user input devices and status indication devices as the top handle chain saw control panel described previously.

User input devices related to other functionalities than the one described herein may also be provided. In the same way, there may also be status indicating devices concerning states of the tools which are not described herein. There could e.g. be a status indicating device related to the charging level of the battery, and/or a status indicating device indicating that a security arrangement has been activated, or a device indicating that the chain lubricant needs to be refilled.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A guide and control assembly of a battery driven portable handheld power tool (1), wherein the power tool is selected from a group comprising a top handle chain saw, rear handle chain saw, hedge trimmer, grass trimmer or a blower, the guide and control assembly (10) comprising:
a main handle (20) of the tool, arranged to be gripped by a hand of an operator, in an operating position, so as to permit the operator to carry and guide the power tool (1) with the hand during operational use thereof,
a recessed user interaction panel (30) comprising a plurality of user input devices (31, 31', 31") and a first status indicating device (32), the user interaction panel (30) being formed in a panel receiving portion (41) of a housing (40) of the power tool (1),
wherein the user interaction panel is positioned such that the user input devices (31) are reachable by a thumb of the hand of the operator when said hand is in the operating position.

2. The guide and control assembly according to claim 1, wherein the user interaction panel (30) is positioned at an upper surface (42) of a body portion (50) of the power tool.

3. The guide and control assembly according to any of the preceding claims, wherein the main handle extends in a longitudinal direction of the power tool, and wherein the user interaction panel (30) is arranged in front of the main handle (20).

4. The guide and control assembly according to any of the preceding claims, wherein the first user input device (31) is an activation button (31), arranged to control activation of a control circuit connected to an electric motor of the power tool (1).

5. The guide and control assembly according to any of the preceding claims, wherein one user input device (31') is chosen from the group comprising an energy saving mode activation button (31'), a change of rotation direction button (31") and a handle heating activation button.

6. The guide and control assembly according to any of the preceding claims, wherein the at least one status indicating device (32) comprises a light emitting diode (32).

7. The guide and control assembly according to any of the preceding claims, wherein the at least one status indicating device (32) is chosen from the group comprising a battery status indicator (32), an activation status indicator (32), a rotation direction indicator (32), an energy saving mode indicator (32) and an error warning indicator (32).

8. The guide and control assembly according to any of the preceding claims, wherein the user interaction panel (30) comprises a plurality of status indicating devices (32).

9. A battery driven portable handheld power tool comprising a guide and control assembly (10) according to any of the preceding claims.

## Patentansprüche

1. Führungs- und Steueranordnung für ein batteriebetriebenes tragbares elektrisches Handwerkzeug (1), wobei das Handwerkzeug ausgewählt ist aus einer Gruppe umfassend eine Obergriff-Kettensäge, eine Kettensäge mit hinterem Handgriff, eine Heckenschere, einen Rasentrimmer oder einen Laubbläser, wobei die Führungs- und Steueranordnung (10) umfasst:
einen Haupthandgriff (20) des Werkzeugs, der angeordnet ist, um von einer Hand einer Bedienperson in der Betriebsposition ergriffen zu werden, um der Bedienperson zu erlauben, das Handwerkzeug (1) während des Verwendungsbetriebs derselben zu halten und zu führen,
ein eingetieftes Bedienerinteraktionsfeld (30) umfassend eine Vielzahl von Benutzereingabevorrichtungen (31, 31', 31") und eine erste Statusanzeigevorrichtung (32), wobei das Bedienerinteraktionsfeld (30) in einem Feldaufnahmeabschnitt (41) eines Gehäuses (40) des Handwerkzeugs (1) ausgebildet ist,
wobei das Bedienerinteraktionsfeld so positioniert ist, dass die Benutzereingabevorrichtungen (31) für den Daumen der Hand der Bedienperson zugänglich sind, wenn die Hand in der Betriebsstellung ist.

2. Führungs- und Steueranordnung nach Anspruch 1, wobei das Bedienerinteraktionsfeld (30) an einer oberen Oberfläche (42) eines Körperabschnitts (50) des Handwerkzeugs positioniert ist.

3. Führungs- und Steueranordnung nach einem der vorhergehenden Ansprüche, wobei der Haupthandgriff sich in einer Längsrichtung des Handwerkzeugs erstreckt, und wobei das Bedienerinteraktionsfeld (30) vor dem Haupthandgriff (20) angeordnet ist.

4. Führungs- und Steueranordnung nach einem der vorhergehenden Ansprüche, wobei die erste Benutzereingabevorrichtung (31) eine Aktivierungstaste (31) ist, die dazu angeordnet ist, die Aktivierung einer Steuerschaltung zu steuern, die mit einem Elektromotor des Handwerkzeugs (1) verbunden ist.

5. Führungs- und Steueranordnung nach einem der vorhergehenden Ansprüche, wobei eine Benutzereingabevorrichtung (31') ausgewählt ist aus der Gruppe umfassend eine Energiesparmodus-Aktivierungstaste (31'), eine Drehrichtungstaste (31") und eine Handgriffheizungs-Aktivierungstaste.

6. Führungs- und Steueranordnung nach einem der vorhergehenden Ansprüche, wobei die zumindest eine Statusanzeigevorrichtung (32) eine lichtemittierende Diode (32) umfasst.

7. Führungs- und Steueranordnung nach einem der vorhergehenden Ansprüche, wobei die zumindest eine Statusanzeigevorrichtung (32) ausgewählt ist aus der Gruppe umfassend eine Batteriezustandsanzeige (32), eine Aktivierungszustandsanzeige (32), eine Drehrichtungsanzeige (32), eine Energiesparmodusanzeige (32) und eine Fehlerwarnanzeige (32).

8. Führungs- und Steueranordnung nach einem der vorhergehenden Ansprüche, wobei das Bedienerinteraktionsfeld (30) eine Vielzahl von Statusanzeigevorrichtungen (32) aufweist.

9. Batteriebetriebenes tragbares elektrisches Handwerkzeug umfassend eine Führungs- und Steueranordnung (10) nach einem der vorhergehenden Ansprüche.

## Revendications

1. Ensemble de guidage et de commande d'un outil électrique portable tenu à la main alimenté par batterie (1), dans lequel l'outil électrique est choisi dans un groupe comprenant une scie à chaîne à poignée supérieure, une scie à chaîne à poignée arrière, un taille-haie, un coupe-herbe et une souffleuse, l'ensemble de guidage et de commande (10) comprenant :
une poignée principale (20) de l'outil, agencée pour être saisie par la main d'un opérateur, dans une position de fonctionnement, de manière à permettre à l'opérateur de porter et de guider l'outil électrique (1) avec la main pendant son utilisation opérationnelle,
un panneau d'interaction d'utilisateur encastré (30) comprenant une pluralité de dispositifs d'entrée d'utilisateur (31, 31', 31") et un premier dispositif d'indication d'état (32), le panneau d'interaction d'utilisateur (30) étant formé dans une partie de réception de panneau (41) d'un boîtier (40) de l'outil électrique (1),
dans lequel le panneau d'interaction d'utilisateur est positionné de sorte que les dispositifs d'entrée d'utilisateur (31) soient accessibles par le pouce de la main de l'opérateur lorsque ladite main est dans la position de fonctionnement.

2. Ensemble de guidage et de commande selon la revendication 1, dans lequel le panneau d'interaction d'utilisateur (30) est positionné au niveau d'une surface supérieure (42) d'une partie de corps (50) de l'outil électrique.

3. Ensemble de guidage et de commande selon l'une des revendications précédentes, dans lequel la poignée principale s'étend dans une direction longitudinale de l'outil électrique, et dans lequel le panneau d'interaction d'utilisateur (30) est agencé devant la poignée principale (20) .

4. Ensemble de guidage et de commande selon l'une des revendications précédentes, dans lequel le premier dispositif d'entrée d'utilisateur (31) est un bouton d'activation (31), agencé pour commander l'activation d'un circuit de commande relié à un moteur électrique de l'outil électrique (1).

5. Ensemble de guidage et de commande selon l'une des revendications précédentes, dans lequel un dispositif d'entrée d'utilisateur (31') est choisi dans le groupe comprenant un bouton d'activation de mode d'économie d'énergie (31'), un bouton de changement de direction de rotation (31") et un bouton d'activation de chauffage de poignée.

6. Ensemble de guidage et de commande selon l'une des revendications précédentes, dans lequel l'au moins un dispositif d'indication d'état (32) comprend une diode électroluminescente (32).

7. Ensemble de guidage et de commande selon l'une des revendications précédentes, dans lequel l'au moins un dispositif d'indication d'état (32) est choisi dans le groupe comprenant un indicateur d'état de batterie (32), un indicateur d'état d'activation (32), un indicateur de direction de rotation (32), un indicateur de mode d'économie d'énergie (32) et un indicateur d'avertissement d'erreur (32).

8. Ensemble de guidage et de commande selon l'une des revendications précédentes, dans lequel le panneau d'interaction d'utilisateur (30) comprend une pluralité de dispositifs d'indication d'état (32).

9. Outil électrique portable tenu à la main alimenté par batterie comprenant un ensemble de guidage et de commande (10) selon l'une des revendications précédentes.
